# EUROPÄISCHE PATENTSCHRIFT

(11) **EP 1 087 499 B1**
(45) Veröffentlichungstag und Bekanntmachung des Hinweises auf die Patenterteilung: **06.10.2004**
(21) Anmeldenummer: 00117797.1
(22) Anmeldetag: 18.08.2000
(51) Int. Cl.: H02K 7/108, H02K 7/14, H02K 7/18, F02N 5/04, F16D 21/08, F02N 11/04

(54) **Schwungnutzvorrichtung**
Device for using intertia
Dispositif d'utilisation de l'inertie

(30) Priorität: 18.09.1999 DE 19944880
(43) Veröffentlichungstag der Anmeldung: 28.03.2001
(73) Patentinhaber: Volkswagen Aktiengesellschaft, 38436 Wolfsburg (DE)
(72) Erfinder: Scholz, Romanus, Dipl.-Ing., 38448 Wolfsburg (DE)

(56) Entgegenhaltungen:
- WO-A-99/22955
- DE-A- 3 737 192
- DE-A- 4 434 019
- US-A- 2 399 097
- US-A- 4 346 773
- US-A- 4 458 156

## Beschreibung

Die Erfindung betrifft eine Schwungnutzvorrichtung gemäß dem Oberbegriff des Patentanspruches 1.

Schwungnutzvorrichtungen, die auch als Schwungnutz-Automatik bezeichnet werden, sind bekannt, beispielsweise aus der DE-OS 43 39 252. Dort ist zwischen einem Verbrennungsmotor und einem zugeordneten Getriebe eine Schwungnutz-Automatik angeordnet. Die Schwungnutz-Automatik umfaßt ein Schwungrad, an dessen Umfang die Teile einer elektrischen Maschine angeordnet sind. Das Schwungrad ist als Rotor bzw. Läufer der elektrischen Maschine ausgebildet.

In Kraftflußrichtung des Antriebsstranges ist bei diesem bekannten Antrieb für ein Kraftfahrzeug zwischen dem Verbrennungsmotor und der Schwungnutz-Automatik sowie zwischen der Schwungnutz-Automatik und dem Getriebe jeweils eine Kupplung vorgesehen. Die beiden Kupplungen dienen dazu, die verschiedenen Betriebszustände zu schalten.

Sind zum Beispiel beide Kupplungen geöffnet, kann die elektrische Maschine das Schwungrad beschleunigen. Durch Schließen der ersten Kupplung, die sich zwischen Verbrennungsmotor und Schwungrad befindet, kann der Verbrennungsmotor gestartet werden. Danach kann das Kraftfahrzeug durch Schließen der zweiten Kupplung, die sich zwischen Schwungrad und Getriebe befindet, angefahren werden. Im Schubbetrieb oder bei Stillstand des Fahrzeugs können beide Kupplungen geöffnet werden und der Verbrennungsmotor kann außer Betrieb gesetzt werden; das Schwungrad läuft weiter. Durch eine geringe elektrische Antriebsleistung kann über die elektrische Maschine das Schwungrad auf Nenndrehzahl gehalten werden. Bei Bedarf kann durch Schließen der Kupplungen sowohl der Verbrennungsmotor wieder gestartet werden als auch das Kraftfahrzeug in Bewegung gesetzt werden.

Die bekannte Schwungnutz-Automatik beansprucht durch das räumliche Hintereinanderschalten der beiden Kupplungen und des Schwungrades einen großen Bauraum, zu-mal die radial außenliegende Umfangsfläche des Schwungrades zur Anordnung der bewegten Teile der elektrischen Maschine eine möglichst große axiale Erstreckung benötigt, um eine maximale elektrische Leistung erzielen zu können. Diese Größe bringt ein hohes Gewicht mit sich.

Aus DE 37 37 192 A1 ist ein Hybridantrieb für ein Fahrzeug bekannt, wobei die Brennkraftmaschine kein Schwungrad aufweist. Statt dessen bildet der Rotor einer Elektromaschine mit wesentlichen Bestandteilen von zur Herstellung drehfester Verbindungen mit der Ausgangswelle der Brennkraftmaschine bzw. Eingangswelle eines nachgeschalteten Getriebes vorgesehenen Trenneinrichtungen eine Schwungmasse, die drehbar auf der Getriebeeingangswelle angeordnet ist. Eine zwischen dem Rotor und der Abtriebswelle der Brennkraftmaschine angeordnete erste Trennkupplung umfasst eine Kupplungsscheibe, welche zwischen einer am Rotor befestigten Reibfläche und einem Kupplungsring sowie axial und radial drehfest an der Ausgangswelle der Brennkraftmaschine angeordnet ist. Eine Tellerfeder drückt auf den Kupplungsring und stellt dadurch eine reibschlüssige Verbindung zwischen der Reibfläche und der Kupplungsscheibe her. Mittels einer Ausrückeinrichtung kann die Tellerfeder vom Eingriff mit dem Kupplungsring gelöst werden, so dass die erste Trennkupplung geöffnet ist und zwischen der Reibfläche und der Kupplungsscheibe keine reibschlüssige Verbindung mehr gegeben ist.

Aus der WO 99 22955 A ist ein Hybridantriebssystem für ein Kraftfahrzeug bekannt, mit einer drehbaren elektrischen Maschine, die über jeweilige Kupplungen zwischen die Brennkraftmaschine und das Getriebe geschaltet ist. Die Kupplung zwischen elektrischer Maschine und Brennkraftmaschine umfasst eine Scheibe, welche drehfest mit dem Rotor der elektrischen Maschine verbunden ist und an gegenüberliegenden Seiten Reibbeläge aufweist. Die Scheibe wirkt zusammen mit einem Reibring, welcher axial verschiebbar am Rotor angeordnet ist. Dem Reibring ist eine Tellerfeder zugeordnet, welche den Reibring gegen den Reibbelag der Scheibe drückt.

Bei neueren Kraftfahrzeugen liegt ein Trend zur Gewichtseinsparung vor, um letztendlich durch das geringere Gewicht des Kraftfahrzeuges Treibstoff einzusparen. Zudem kann mittels einer Schwungnutz-Automatik der Verbrauch des Kraftfahrzeuges weiter abgesenkt werden.

Der Erfindung liegt die Aufgabe zugrunde, eine Schwungnutzvorrichtung der o.g Art, bzgl. Funktion zu verbessern.

Diese Aufgabe wird durch eine Schwungnutzvorrichtung der o.g. Art mit den in Anspruch 1 gekennzeichneten Merkmalen gelöst. Vorteilhafte Weiterbildungen sind in den abhängigen Ansprüchen angegeben.

Hierzu ist es erfindungsgemäß vorgesehen, dass die erste Kupplung ein Paar von Mitnehmerscheiben aufweist, die drehfest an der Abtriebswelle befestigt und zueinander in axialer Richtung spreizbar sind, wobei zwischen den beiden Mitnehmerscheiben eine Tellerfeder angeordnet ist, welche mittels einer Ausrückeinrichtung betätigbar ist, und wobei äußere Teile der ersten Kupplung durch eine axial feststehende Druckplatte und einen axial feststehenden Träger des Schwungrades ausgebildet sind, gegen die die Tellerfeder die Mitnehmerscheiben drückt.

Im Betriebszustand "stehender Verbrennungsmotor" und "laufendes Schwungrad" ist diese erste Kupplung ausgerückt und da die Mitnehmerscheiben ebenfalls still stehen und eine Ausrückeinrichtung, die die Stellkolben umfaßt, ebenfalls reibfrei ist, ist die benötigte elektrische Energie für das Halten der Nenndrehzahl des Schwungrades deutlich reduziert.

In einer bevorzugten Ausführungsform lässt sich diese erste Kupplung über eine Mehrzahl von Stellkolben öffnen bzw. schließen, wobei diese Stellkolben konzentrisch um die Abtriebswelle angeordnet sind.

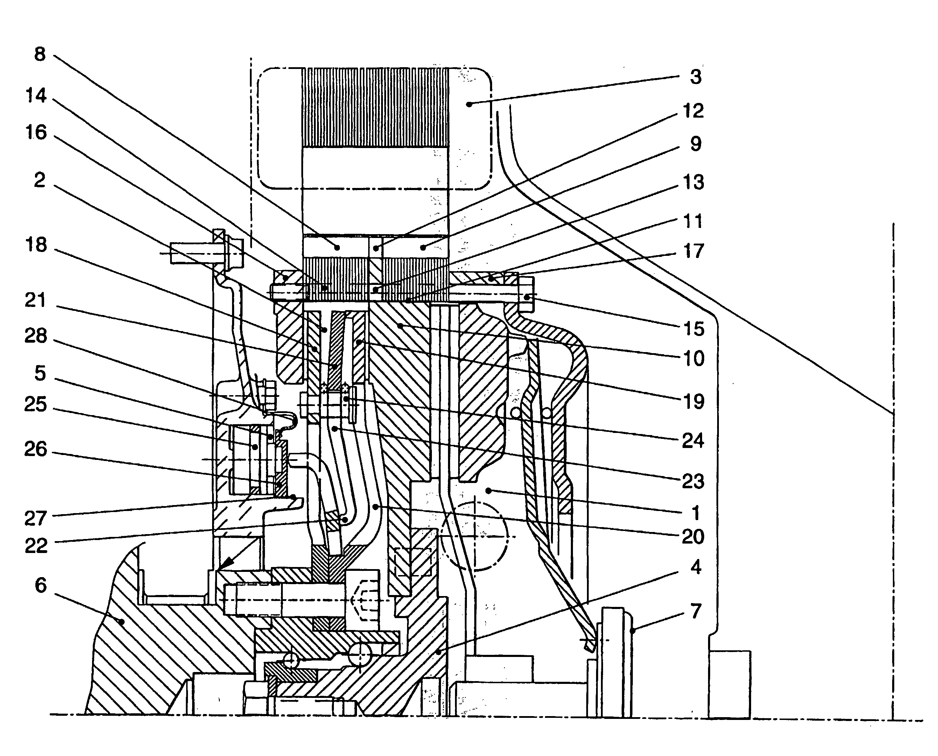

Die Erfindung wird im Folgenden anhand einer bevorzugten Ausführungsform erläutert werden, wobei in der Figur schematisch die erfindungsgemäße Schwung-nutzvorrichtung im Teilquerschnitt dargestellt ist.

In der Figur ist die Schwungnutzvorrichtung im Querschnitt gezeigt, wobei links ein Teil einer Abtriebswelle 6 eines Verbrennungsmotors (nicht dargestellt) gezeigt ist, sowie rechts ein Getriebe 7 angedeutet ist.

Zwischen der Antriebswelle 6 und dem Getriebe 7 befindet sich ein Schwungrad 4, wobei antriebsseitig und abtriebsseitig jeweils eine Kupplung 2 und 1 vorgesehen ist. Antriebsseitig bedeutet in diesem Zusammenhang die Position zwischen Verbrennungsmotor und Schwungrad 4, während abtriebsseitig die Position zwischen Schwungrad 4 und Getriebe 7 bedeutet.

An dem Schwungrad 4 ist am Außenumfang ein Teil einer elektrischen Maschine 3 integriert. In der gezeigten, bevorzugten Ausführungsform sind zwei Läufereisen 8 und 9 mittels eines Befestigungsmittels 15, einer Schraube, an einer Zentrierung 11 und an einem Flansch 12 befestigt. Bohrungen 13 in dem Flansch 12 und Schlitze 14 in den beiden Läufereisen 8 und 9 erlauben den Durchtritt des Befestigungsmittels 15.

Das Befestigungsmittel 15 sichert auch eine Druckplatte 16 der ersten Kupplung 2 am Schwungrad 4. Durch diese Anordnung wird ein Schwungrad 4 gebildet, welches in der Halbschnittdarstellung im Wesentlichen L-förmig ausgebildet ist, so daß der Querschnitt eine im Wesentlichen C-förmige Gestaltung ergibt.

Innerhalb des Innenraums des C-förmigen Schwungrades 4 ist die erste Kupplung 2 angeordnet, wobei bevorzugt der größtmögliche Außendurchmesser der ersten Kupplung 2 mit einem kleinstmöglichen Innendurchmesser der Läufereisen 8 und 9 kombinierbar ist.

Schließlich ist abtriebsseitig an dem Schwungrad 4 mittels des Befestigungsmittels 15 ein Ringelement 17 befestigt, welche Teil der zweiten Kupplung 1 ist.

Durch diese Anordnung wird eine bestmögliche Nutzung des Bauraumes erreicht. Bei optimierter Baulänge der Schwungnutzvorrichtung ist eine erste Kupplung 2 mit maximalem Durchmesser und ein Rotor der elektrischen Maschine 3 mit minimalem Durchmesser kombiniert. Die Befestigung der Bauteile ist solide und einfach montierbar und demontierbar.

Die spezielle Anordnung der ersten Kupplung 2 stellt eine Umkehrung der herkömmlichen Kupplungsanordnungen dar. Die außenliegenden Teile, wie die Druckplatte 16 oder ein Träger 10 sind axial starr montiert, während die ansonsten starre Mitnehmerscheibe, hier bei der vorliegenden Erfindung verdrehfest an der Kurbelwelle 6 befestigt ist und zweiteilig, spreizbar ausgebildet ist.

Die beiden Mitnehmerscheiben 18 und 19 weisen Durchbrüche 20 auf und sind in der Blechdicke so ausgeführt, daß sie axial elastisch verformbar sind und radial fest und steif genug sind, um das geforderte Drehmoment übertragen zu können.

Im geschlossenen Zustand der ersten Kupplung 2 drückt eine zwischen den beiden Mitnehmerscheiben 18 und 19 angeordnete Tellerfeder 21 die beiden Mitnehmerscheiben 18 und 19 auseinander. Hierdurch erfolgt die erforderliche Anpressung der Mitnehmerscheiben 18 und 19 an den Träger 10 und die Druckplatte 16.

Zum Öffnen der ersten Kupplung 2 wird über eine gehäusefest montierte Ausrückeinrichtung 5 ein Ringhebel 22 betätigt, der ähnlich einer Tellerfeder mit Federzungen am Innen- und Außendurchmesser ausgebildet ist, wobei der Ringhebel 22 seinerseits die Zungen 23 der Tellerfeder 21 axial belastet.

Durch die entsprechende, bevorzugte Ausführung des Ringhebels 22 und der Tellerfeder 21 wird die von der Ausrückeinrichtung 5 aufgebrachte Kraft zweimal übersetzt, spannt die Tellerfeder 21 und entlastet die der Ausrückeinrichtung 5 gegenüberliegende Mitnehmerscheibe 19. Diese Mitnehmerscheibe 19 ist elastisch ausgeführt und so vorgespannt, daß sie dabei von dem Träger 10 abhebt. Zur gleichen Zeit bewirkt die Reaktionskraft der Ausrückkraft über eine Lagerung 24 der Tellerfeder 21 eine Durchtellerung der der Ausrückeinrichtung 5 zugewandten Mitnehmerscheibe 18, so daß diese Mitnehmerscheibe 18 von der Druckplatte 16 abhebt.

Die erste Kupplung 2 ist geöffnet. In diesem Zustand kann der Verbrennungsmotor still stehen bzw. abgeschaltet werden. Sowohl die Ausrückeinrichtung 5 als auch die Mitnehmerscheiben 18 und 19 stehen still, so daß hier auch keine Reibungsverluste mehr auftreten können.

Bei herkömmlichen Kupplungsanordnungen würde am Ausrücklager weiterhin Reibung auftreten.

Im Falle der erfindungsgemäßen Schwungnutzvorrichtung ist durch eine geeignete Maßnahme, nämlich das Vorsehen einer Feder 28, die die Stellkolben 25 der Ausrückeinrichtung 5 zurückstellt, sichergestellt, daß bei geschlossener Kupplung 2 die Ausrückeinrichtung 5 den Ringhebel 22 nicht berührt.

Bei herkömmlichen Betätigungseinrichtungen für Kupplungen sind üblicherweise ringförmige Zylinder-Kolben-Systeme um die Antriebswelle konzentrisch angeordnet. Die dabei auf-tretenden großen Durchmesser lassen sich nur schwer fertigen und ergeben große Dichtlängen.

Bei der vorliegenden Erfindung werden anstelle eines solchen Ringkolbens mit großem Durchmesser drei oder mehr kleine Stellkolben 25 vorgesehen, deren gesamte Kolbenfläche für eine bestimmte Ausrückkraft bei einem bestimmten Druck der eines einzigen Ringkolbens entspricht. Die Stellkolben 25 sind gleichmäßig verteilt. Die sich ergebende Dichtlänge ist deutlich kürzer als beim herkömmlichen Ringkolben.

Die Stellkolben 25 sind infolge der kurzen Führungslänge im Zylinder bzw. Gehäuse durch einen konzentrisch zu der Abtriebswelle 6 angeordneten Ring 26 zusätzlich ausgerichtet und am Gehäuse durch eine Führung 27 zusätzlich geführt.

Im entlasteten Zustand werden die Stellkolben 25 durch am Gehäuse befestigte Federn 28 in die Ausgangsstellung zurück gedrückt.

Die Baulänge einer solchen erfindungsgemäßen Schwungnutzvorrichtung ist deutlich kürzer als die der bekannten Bauformen. Das Ausrücklager für die erste Kupplung 2 kann entfallen oder wird alternativ sehr weniger belastet. Im vorliegende Fall entfällt das Reibmoment bei stehendem Motor und laufendem Schwungrad 4 an der Ausrückung völlig. Dadurch wird die elektrische Leistung zum Halten der Nenndrehzahl des Schwungrades 4 ganz wesentlich reduziert.

Werden bei der vorliegenden Schwungnutzeinrichtung beide Kupplungen 1 und 2 geöffnet, dann kann die elektrische Maschine 3 das Schwungrad 4 beschleunigen. Durch Schließen der ersten Kupplung 2, die sich zwischen Verbrennungsmotor und Schwungrad 4 befindet, kann der Verbrennungsmotor gestartet werden. Danach kann das Kraftfahrzeug durch Schließen der zweiten Kupplung 1, die sich zwischen Schwungrad 4 und Getriebe 7 befindet, angefahren werden. Im Schubbetrieb oder bei Stillstand des Fahrzeugs können beide Kupplungen 1 und 2 geöffnet werden und der Verbrennungsmotor kann außer Betrieb gesetzt werden; das Schwungrad 4 läuft weiter. Durch eine geringe elektrische Antriebsleistung kann über die elektrische Maschine 3 das Schwungrad 4 auf Nenndrehzahl gehalten werden. Bei Bedarf kann durch Schließen der Kupplungen 1 und 2 sowohl der Verbrennungsmotor wieder gestartet werden als auch das Kraftfahrzeug in Bewegung gesetzt werden.

Weitere Merkmale und Vorteile der erfindungsgemäßen Schwungnutzvorrichtung ergeben sich aus den Patentansprüchen und der Zeichnung, auf die ausdrücklich verwiesen wird.

### BEZUGSZEICHENLISTE

- 1: Zweite Kupplung
- 2: Erste Kupplung
- 3: Elektrische Maschine
- 4: Schwungrad
- 5: Ausrückeinrichtung
- 6: Abtriebswelle des Verbrennungsmotors
- 7: Getriebe
- 8: Läufereisen
- 9: Läufereisen
- 10: Träger
- 11: Zentrierung
- 12: Flansch
- 13: Bohrung(en)
- 14: Schlitz(e)
- 15: Befestigungsmittel
- 16: Druckplatte
- 17: Ringelement
- 18: Mitnehmerscheibe
- 19: Mitnehmerscheibe
- 20: Durchbruch
- 21: Tellerfeder
- 22: Ringhebel
- 23: Zunge(n)
- 24: Lagerung
- 25: Stellkolben
- 26: Ring
- 27: Führung
- 28: Feder

## Patentansprüche

1. Schwungnutzvorrichtung, insbesondere für ein Kraftfahrzeug, mit einem Schwungrad (4), welches über eine erste Kupplung (2) mit der Abtriebswelle (6) eines Verbrennungsmotors verbunden ist, wobei abtriebsseitig des Schwungrades (4) eine zweite Kupplung (1) angeordnet ist, die eine Verbindung zu einem Getriebe (7) herstellt, wobei an einem Umfang des Schwungrades (4) ein Rotor einer elektrischen Maschine (3) ausgebildet ist, wobei das Schwungrad (4) im Querschnitt im wesentlichen C-förmig ausgebildet ist, und daß die erste Kupplung (K2) im wesentlichen im Innenraum des C-förmigen Schwungrades (4) angeordnet ist, **dadurch gekennzeichnet, dass** die erste Kupplung (2) ein Paar von Mitnehmerscheiben (18, 19) aufweist, die drehfest an der Abtriebswelle (6) befestigt und zueinander in axialer Richtung spreizbar sind, wobei zwischen den beiden Mitnehmerscheiben (18, 19) eine Tellerfeder (21) angeordnet ist, welche mittels einer Ausrückeinrichtung (5) betätigbar ist, und wobei äußere Teile der ersten Kupplung (2) durch eine axial feststehende Druckplatte (16) und einen axial feststehenden Träger (10) des Schwungrades (4) ausgebildet sind, gegen die die Tellerfeder (21) die Mitnehmerscheiben (18, 19) drückt.

2. Schwungnutzvorrichtung nach Anspruch 1, **dadurch gekennzeichnet, dass** am Umfang des Schwungrades (4) eine vorsprungartige Zentrierung (11) vorgesehen ist, die radial außenliegend einen Flansch (12) hat.

3. Schwungnutzvorrichtung nach Anspruch 2, **dadurch gekennzeichnet, dass** der Rotor zumindest ein Läufereisen (8, 9) aufweist, welches mittels der Zentrierung (11) und dem Flansch (12) exakt am Schwungrad (4) positioniert ist.

4. Schwungnutzvorrichtung nach Anspruch 2 oder 3, **dadurch gekennzeichnet, dass** die Zentrierung (11) und/oder der Flansch (12) eine Bohrung (13) aufweist, und dass die Läufereisen (8, 9) jeweils einen Schlitz (14) aufweisen, so dass die Läufereisen (8, 9) an der Zentrierung und/oder dem Flansch (12) mittels eines Befestigungsmittels (15) festlegbar sind.

5. Schwungnutzvorrichtung nach Anspruch 4, **dadurch gekennzeichnet, dass** das Befestigungsmittel (15) eine Schraube ist.

6. Schwungnutzvorrichtung nach Anspruch 4 oder 5, **dadurch gekennzeichnet, dass** das Befestigungsmittel (15) zum Befestigen eines Ringelements (17) dient, welches die zweite Kupplung (1) trägt.

7. Schwungnutzvorrichtung nach einem der Ansprüche 4 bis 6, **dadurch gekennzeichnet, dass** das Befestigungsmittel (15) zum Befestigen einer Druckplatte (16) der ersten Kupplung (2) an den Läufereisen (8, 9) dient.

8. Schwungnutzvorrichtung nach einem der Ansprüche 3 bis 7, **dadurch gekennzeichnet, dass** der Innendurchmesser des Läufereisens (8, 9) im wesentlichen dem Außendurchmesser der ersten Kupplung (2) entspricht.

9. Schwungnutzvorrichtung nach wenigstens einem der vorhergehenden Ansprüche, **dadurch gekennzeichnet, dass** die Ausrückeinrichtung (5) eine Mehrzahl von Stellkolben (25) umfasst, die auf Zungen (23) der Tellerfeder (21) einwirken.

10. Schwungnutzvorrichtung nach Anspruch 9, **dadurch gekennzeichnet, dass** jeder Stellkolben (25) mittels einer Feder (28) rückstellbar ist.

11. Schwungnutzvorrichtung nach Anspruch 9 oder 10, **dadurch gekennzeichnet, dass** die Stellkolben (25) auf einen Ringhebel (22) einwirken, der wiederum auf die Tellerfeder (21) drückt.

## Claims

1. Flywheel moment utilization apparatus, in particular for a motor vehicle, having a flywheel (4) which is connected via a first clutch (2) to the output drive shaft (6) of an internal combustion engine, with a second clutch (1) being arranged on the output drive side of the flywheel (4) and producing a connection to gearbox (7), with a rotor of an electrical machine (3) being formed on the circumference of the flywheel (4) with the flywheel (4) having an essentially C-shaped cross section, and with the first clutch (K2) being arranged essentially in the interior of the C-shaped flywheel (4), **characterized in that** the first clutch (2) has a pair of driver discs (18, 19) which are attached to the output drive shaft (6) such that they rotate together and which can be spread with respect to one another in the axial direction, with a cup spring (21) being arranged between the two driver discs (18, 19), which cup spring (21) can be operated by means of a disengaging device (5) and with outer parts of the first clutch (2) being formed by an axially stationary pressure plate (16) and an axially stationary mount (10) for the flywheel (4), against which the cup spring (21) presses the driver discs (18, 19).

2. Flywheel moment utilization apparatus according to Claim 1, **characterized in that** a centring device (11) which is like a projection and has a flange (12) radially on the outside is provided on the circumference of the flywheel (4).

3. Flywheel moment utilization apparatus according to Claim 2, **characterized in that** the rotor has at least one rotor core (8, 9) which is positioned exactly on the flywheel (4) by means of the centring device (11) and the flange (12).

4. Flywheel moment utilization apparatus according to Claim 2 or 3, **characterized in that** the centring device (11) and/or the flange (12) have/has a hole (13) and **in that** the rotor cores (8, 9) each have a slot (14) so that the rotor cores (8, 9) can be fixed on the centring device and/or on the flange (12) by means of an attachment means (15).

5. Flywheel moment utilization apparatus according to Claim 4, **characterized in that** the attachment means (15) is a screw.

6. Flywheel moment utilization apparatus according to Claim 4 or 5, **characterized in that** the attachment means (15) is used for attachment of an annular element (17) to which the second clutch (1) is fitted.

7. Flywheel moment utilization apparatus according to one of Claims 4 to 6, **characterized in that** the attachment means (15) is used for attachment of a pressure plate (16) of the first clutch (2) to the rotor cores (8, 9).

8. Flywheel moment utilization apparatus according to one of Claims 3 to 7, **characterized in that** the internal diameter of the rotor core (8, 9) corresponds essentially to the external diameter of the first clutch (2).

9. Flywheel moment utilization apparatus according to at least one of the preceding claims, **characterized in that** the disengaging device (5) has a number of control pistons (25) which act on tongues (23) on the cup spring (21).

10. Flywheel moment utilization apparatus according to Claim 9, **characterized in that** each control piston (25) can be reset by means of a spring (28).

11. Flywheel moment utilization apparatus according to Claim 9 or 10, **characterized in that** the control pistons (25) act on an annular lever (22), which in turn presses against the cup spring (21).

## Revendications

1. Dispositif d'utilisation de l'inertie, notamment pour un véhicule automobile, comportant une roue d'inertie (4), qui est reliée par un premier accouplement (2) à l'arbre entraîné (6) d'un moteur à combustion, étant disposé, du côté entraîné de la roue d'inertie (4), un deuxième accouplement (1) qui établit une liaison avec une transmission (7), un rotor d'un engin électrique (3) étant formé sur une circonférence de la roue d' inertie (4), la roue d'inertie (4) étant réalisée dans sa section transversale substantiellement en forme de C et le premier accouplement (K2) étant substantiellement disposé dans l'espace intérieur de la roue d'inertie en forme de C (4), **caractérisé en ce que** le premier accouplement (2) présente une paire de rondelles d'entraînement (18, 19), qui sont fixées de manière fixe en rotation sur l'arbre entraîné (6) et peuvent s'écarter l'une de l'autre dans le sens axial, étant disposée entre les deux rondelles d'entraînement (18, 19), une rondelle à ressort (21) qui est actionnable au moyen d'un dispositif de débrayage (5), et les pièces extérieures du premier accouplement (2) étant constituées par un plateau de compression (16) axialement fixe et un support (10) axialement fixe de la roue d'inertie (4), contre lesquels la rondelle à ressort (21) comprime les rondelles d'entraînement (18, 19).

2. Dispositif d'utilisation de l'inertie selon la revendication 1, **caractérisé en ce qu'**il est prévu, sur la circonférence de la roue d'inertie (4), un moyen de centrage (11) de type saillie, qui comporte à l'extérieur radialement une bride (12).

3. Dispositif d'utilisation de l'inertie selon la revendication 2, **caractérisé en ce que** le rotor présente au moins un fer de rotor (8, 9) qui, grâce au moyen de centrage (11) et à la bride (12), est positionné précisément sur la roue d'inertie (4).

4. Dispositif d'utilisation de l'inertie selon la revendication 2 ou 3, **caractérisé en ce que** le moyen de centrage (11) et/ou la bride (12) présente un alésage (13) et que les fers de rotor (8, 9) présentent respectivement une fente (14), de sorte que les fers de rotor (8, 9) peuvent être fixés sur le moyen de centrage et/ou la bride (12) à l'aide d'un moyen de fixation (15).

5. Dispositif d'utilisation de l'inertie selon la revendication 4, **caractérisé en ce que** le moyen de fixation (15) est une vis.

6. Dispositif d'utilisation de l'inertie selon la revendication 4 ou 5, **caractérisé en ce que** le moyen de fixation (15) sert à fixer un élément annulaire (17) qui supporte le deuxième accouplement (1).

7. Dispositif d'utilisation de l'inertie selon l'une quelconque des revendications 4 à 6, **caractérisé en ce que** le moyen de fixation (15) sert à fixer un plateau de compression (16) du premier accouplement (2) aux fers de rotor (8, 9).

8. Dispositif d'utilisation de l'inertie selon l'une quelconque des revendications 3 à 7, **caractérisé en ce que** le diamètre intérieur du fer de rotor (8, 9) équivaut substantiellement au diamètre extérieur du premier accouplement (2).

9. Dispositif d'utilisation de l'inertie selon au moins l'une quelconque des revendications précédentes, **caractérisé en ce que** le dispositif de débrayage (5) comprend une pluralité de pistons de réglage (25) qui agissent sur des languettes (23) de la rondelle à ressort (21).

10. Dispositif d'utilisation de l'inertie selon la revendication 9, **caractérisé en ce que** chaque piston de réglage (25) peut être rétracté au moyen d'un ressort (28).

11. Dispositif d'utilisation de l'inertie selon la revendication 9 ou 10, **caractérisé en ce que** les pistons de réglage (25) agissent sur un levier annulaire (22) qui appuie à son tour sur la rondelle à ressort (21).
